# EUROPÄISCHE PATENTSCHRIFT

(11) **EP 2 776 358 B1**
(45) Veröffentlichungstag und Bekanntmachung des Hinweises auf die Patenterteilung: **11.05.2016**
(21) Anmeldenummer: 12787408.9
(22) Anmeldetag: 05.11.2012
(51) Int. Cl.: B66C 1/02, B65G 47/91, B65H 3/08, B25J 15/06

(54) **VORRICHTUNG ZUM HEBEN UND POSITIONIEREN EINES OBJEKTS**
DEVICE FOR LIFTING AND POSITIONING AN OBJECT
DISPOSITIF POUR SOULEVER ET POSITIONNER UN OBJET

(30) Priorität: 07.11.2011 DE 202011107531 U
(43) Veröffentlichungstag der Anmeldung: 17.09.2014
(60) Teilanmeldung: 14172827.9
(73) Patentinhaber: BDT Media Automation GmbH, 78628 Rottweil (DE)
(72) Erfinder: KEARNEY, Peter Xavier, 24326 Dörnick (DE)
(74) Vertreter: Westphal, Mussgnug & Partner Patentanwälte mbB
(86) Internationale Anmeldenummer: PCT/EP2012/071791
(87) Internationale Veröffentlichungsnummer: WO 2013/068307

(56) Entgegenhaltungen:
- EP-A2- 2 361 860
- DE-A1- 2 330 204
- FR-A1- 2 709 478
- GB-A- 966 957
- US-A- 3 796 455
- US-A- 6 131 973
- US-A1- 2003 021 687
- US-A1- 2004 207 219
- US-A1- 2007 198 027

## Beschreibung

Die Erfindung betrifft eine Vorrichtung zum Heben und Positionieren eines Objekts gemäß dem Oberbegriff des Anspruchs 1. Eine solche Vorrichtung ist z.b. aus US 2007/198027 bekannt.

Bekannt sind Vorrichtungen zum Heben und Positionieren eines Objektes im Raum basierend auf Saugköpfen, beispielsweise elastischen Saugnäpfen, welche an eine Pumpe oder ähnliches angeschlossen sind, um mit dem Saugkopf das Objekt durch den Unterdruck und die Reibung zu halten und an dem Saugkopf hängend beliebig im Raum bewegen zu können. Insbesondere für größere oder flache Artikel, wie Plastikfolien, Metallbleche oder Papier, werden in der Regel mehrere Saugköpfe benötigt, um das Objekt während der Bewegung halten zu können. Bei der Bewegung muss eine Relativbewegung zwischen dem Objekt und dem Saugkopf zuverlässig vermieden werden, um eine exakte Positionierung des Objekts im Anschluss an die Bewegung ermöglichen zu können.

Bei Verwendung der bekannten Saugköpfe für geometrisch verformte Objekte, Objekte mit einer rauen Oberfläche oder Objekte, welche ölig, dreckig oder auf andere Weise verschmutzt sind, besteht die Gefahr, dass die Saugköpfe kurzfristig Kontakt mit dem Objekt verlieren und das Objekt vom Saugkopf fällt. Weiterhin besteht die Gefahr, dass bei Verwendung von bekannten Saugköpfen bei einer geneigten Bewegung im Raum die Objekte von den Saugköpfen durch die Bewegung abgeschält werden und herunterfallen.

Zur Handhabung von Objekten, insbesondere von flachen Objekten, sind weiterhin Vorrichtungen bekannt, bei welchen innerhalb eines meist zylindrischen Gehäuses ein Wirbelwind erzeugt wird, welcher einen Unterdruck erzeugt, durch welchen Objekte angezogen werden können. Derartige Vorrichtungen werden auch als Vortex-Attraktor bezeichnet. Die US 6,565,321 beschreibt einen Vortex-Attraktor, welcher einen Impeller mit einer Vielzahl von radial angeordneten Flügeln zur Erzeugung eines Wirbelwinds aufweist. Der Wirbelwind führt zu einem Unterdruck, welcher benutzt werden kann, um ein Objekt anzuziehen und zu halten.

Bei bekannten Vortex-Attraktoren kann jedoch ebenfalls das Problem auftreten, dass Objekte mit einer gebogenen Geometrie oder einer rauen Oberfläche sich während des Hebe- oder Haltevorgangs relativ zu der Vorrichtung verschieben, so dass eine exakte Positionierung des Objekts verhindert wird.

Die Aufgabe der Erfindung besteht daher darin, eine Vorrichtung zum Heben und Positionieren eines Objekts bereitzustellen, mit welcher eine möglichst gute Positionierung des Objekts möglich wird.

Die Aufgabe der Erfindung wird gelöst durch eine Vorrichtung, mit den Merkmalen des Anspruchs 1.

Die erfindungsgemäße Vorrichtung weist alle Merkmale des Anspruchs 1 auf.

Erfindungsgemäß wird die Reibung zwischen dem Objekt und der Vorrichtung zum Heben und Positionieren des Objekts erhöht, um eine versehentliche relative Bewegung zwischen dem Objekt und der Vorrichtung zu vermeiden.

Besonders bevorzugt überdeckt das Reibelement weniger als 60% der Fläche der Saugöffnung, um die Ausbildung des Unterdrucks durch den Wirbelwind vor der Saugöffnung möglichst wenig zu beeinträchtigen.

Vorzugsweise weist das Reibelement eine Höhe auf, welche geringer als 4% des Durchmessers der Saugöffnung ist, um die Ausbildung des Unterdrucks durch den Wirbelwind vor der Saugöffnung möglichst wenig zu beeinträchtigen.

Gemäß einer bevorzugten Ausführungsform ist das Reibelement elastisch und beispielsweise aus Gummi gefertigt, um eine Anlage auch an geometrisch verformte Objekte möglichst zuverlässig zu ermöglichen.

Vorzugsweise weist das Reibelement eine axialsymmetrische oder punktsymmetrische Geometrie auf, was eine einfache und kostengünstige Herstellungsweise ermöglicht.

Vorzugsweise ist das Reibelement als Gitter ausgebildet, um eine gleichmäßige Ausbildung des Unterdrucks vor der Saugöffnung zu ermöglichen.

Gemäß einer bevorzugten Ausführungsform der Erfindung weist das Reibelement zumindest ein ringförmiges Element auf, welches vorzugsweise konzentrisch vor oder in der Saugöffnung angeordnet ist.

Erfindungsgemäß weist das Reibelement ein rundes Element auf, welches vorzugsweise konzentrisch in oder vor der Saugöffnung angeordnet ist.

Gemäß einer besonders bevorzugten Ausführungsform der Erfindung weist das Reibelement eine dreidimensionale Struktur auf, mit welcher eine Anlage auch an geometrisch verformte, unebene, raue oder verschmutzte Objekte besonders gut möglich ist. Vorzugsweise ist das Reibelement wellenförmig ausgebildet und weist vorzugsweise konzentrische Wellen auf, was eine gute Anlage auch an geometrisch verformte, unebene, raue oder verschmutzte Objekte ermöglicht.

Gemäß einer bevorzugten Ausführungsform der Erfindung weist das Reibelement Strukturelemente wie beispielsweise Rippen, Dellen und/oder Noppen auf, wobei die Strukturelemente vorzugsweise in einem Raster angeordnet sind, um auf diese Weise eine erhöhte Reibung zwischen der Vorrichtung zum Heben oder Positionieren des Objekts und dem Objekt selbst zu ermöglichen.

Gemäß einer bevorzugten Weiterbildung der Erfindung weist das Reibelement eine perforierte Oberfläche auf, wodurch eine gleichmäßige Ausbildung des Unterdrucks vor der Saugöffnung begünstigt wird.

Gemäß einer bevorzugten Ausführungsform der Erfindung ist das Reibelement aus wenigstens zwei verschiedenen Materialien mit verschiedenen Reibkoeffizienten und/oder verschiedenen Oberflächenstrukturen und/oder verschiedenen Mustern und/oder verschiedenen Durchlässigkeitsgraden gefertigt, um das Reibelement möglichst günstig an verschiedene Objekte anpassen zu können.

Gemäß einer vorteilhaften Ausführungsform der Erfindung sind zwei Reibelemente vorgesehen, wobei wenigstens eines der Reibelemente in seiner Position entlang der Längsachse des Wirbelwinds variierbar ist, um eine Anlage an verschieden geformte Objekte zu ermöglichen und insbesondere Toleranzen ausgleichen zu können.

Erfindungsgemäß weist das Reibelement ein ringförmiges Element und ein rundes Element auf, wobei das ringförmige Element axial versetzt zu dem runden Element in Richtung der Längsachse des Wirbelwinds angeordnet ist.

Vorteilhafterweise sind das ringförmige Element und das runde Element in radialer Richtung überlappend angeordnet.

Gemäß einer besonders bevorzugten Ausführungsform der Erfindung ist das Reibelement an dem Gehäuse mittels eines federnden Elements angeordnet, um auf diese Weise eine möglichst gute Anlage an verschieden geformte Objekte zu ermöglichen oder gegebenenfalls Toleranzen ausgleichen zu können.

Vorzugsweise ist das Reibelement luftdurchlässig ausgebildet, um die Ausbildung des Unterdrucks vor Saugöffnung möglichst wenig zu beeinträchtigen.

Gemäß einer bevorzugten Ausführungsform sind zwei Reibelemente vorgesehen, wobei die beiden Reibelemente in ihrem relativen Abstand zueinander und/oder in ihrem relativen Abstand zu dem Gehäuse variabel angeordnet sind, um auf diese Weise eine möglichst günstige Anpassung an verschiedene Oberflächenstrukturen zu ermöglichen.

Die Erfindung wird anhand der nachfolgenden Figuren ausführlich erläutert.

Es zeigt:
- Fig. 1: eine Seitenansicht eines nicht erfindungsgemäßigen Ausführungsbeispiels eines Vortex-Attraktors,
- Fig. 2: eine schematische Darstellung der Luftströmungen, welche durch einen Vortex-Attraktor gemäß Fig. 1 erzeugt werden,
- Fig. 3: eine schematische Darstellung eines Ausführungsbeispiels einer Vorrichtung zum Heben und Positionieren eines Objekts,
- Fig. 4a: einen Axialschnitt durch einen Vortex-Attraktor mit einem Reibelement,
- Fig. 4b: eine Draufsicht auf das Reibelement des nicht erfindungsgemäßigen Vortex-Attraktors gemäß Fig. 4a,
- Fig. 5: einen Axialschnitt durch einen Vortex-Attraktor mit einem Reibelement,
- Fig. 6: einen Axialschnitt durch einen Vortex-Attraktor mit einem Reibelement,
- Fig. 7: einen Axialschnitt durch einen Vortex-Attraktor mit einem Reibelement gemäß einer Ausführungsform der Erfindung,
- Fig. 8: einen Axialschnitt durch einen Vortex-Attraktor mit einem Reibelement gemäß einer weiteren Ausführungsform der Erfindung,
- Fig. 9: eine Draufsicht auf ein Reibelement,
- Fig. 10: eine Draufsicht auf ein Reibelement,
- Fig. 11: eine Draufsicht auf ein Reibelement,
- Fig. 12: eine Draufsicht auf ein Reibelement,
- Fig. 13: eine Ausschnittsvergrößerung aus Fig. 12,
- Fig. 14: eine Draufsicht auf ein Reibelement,
- Fig. 15: eine Draufsicht auf ein Reibelement,
- Fig. 16: eine Draufsicht auf ein Reibelement,
- Fig. 17: einen Längsschnitt durch einen nicht erfindungsgemäßigen Vortex-Attraktor mit einem axial verschiebbaren Gehäuse mit einer schematischen Darstellung der Luftströmungen,
- Fig. 18: den Vortex-Attraktor gemäß Fig. 17 mit dem Gehäuse in einer verschobenen Position und einer schematischen Darstellung der Luftströmungen,
- Fig. 19: ein Vergleich der erzeugten Unterdrücke der Vorrichtung gemäß Fig. 17 und Fig. 18,
- Fig. 20a: einen Längsschnitt durch eine Vortex-Attraktor mit einer Irisblende,
- Fig. 20b: eine Explosionsdarstellung des Vortex-Attraktors gemäß Fig. 20a,
- Fig. 21a: eine Draufsicht auf den Vortex-Attraktor gemäß Fig. 20a mit geschlossener Iris,
- Fig. 21b: eine Draufsicht auf den Vortex-Attraktor gemäß Fig. 20a mit teilweise geöffneter Iris,
- Fig. 21c: eine Draufsicht auf den Vortex-Attraktor gemäß Fig. 20a mit geöffneter Iris,
- Fig. 22a: eine Darstellung des Unterdrucks des Vortex-Attraktors gemäß Fig. 21a,
- Fig. 22b: eine Darstellung des Unterdrucks des Vortex-Attraktors gemäß Fig. 21b,
- Fig. 22c: eine Darstellung des Unterdrucks des Vortex-Attraktors gemäß Fig. 21c,
- Fig. 23a: eine schematische Darstellung eines Blendenelements,
- Fig. 23b: zwei relativ zueinander verdrehbare Blendenelemente gemäß Figur 23a in einer ersten Position,
- Fig. 23c: zwei Blendenelemente gemäß der Ausführungsform gemäß Fig. 23a in einer weiteren Position,
- Fig. 24a: einen Längsschnitt durch ein Blendenelement gemäß einer in Fig. 25 dargestellten weiteren Ausführungsform in einer ersten Position,
- Fig. 24b: das Reibelement gemäß Fig. 24a in einer weiteren Position
- Fig. 25: eine Draufsicht auf das Blendenelement gemäß Fig. 24a und Fig. 24b,
- Fig. 26: einen Längsschnitt durch einen nicht erfindungsgemäßigen Vortex-Attraktor mit einem Reibelement,
- Fig. 27a: eine Draufsicht auf ein Blendenelement,
- Fig. 27b: eine Draufsicht auf ein Blendenelement,
- Fig. 27c: die beiden Blendenelemente gemäß Fig. 27a und Fig. 27b übereinandergelegt in einer ersten relativen Position,
- Fig. 27d: die beiden Blendenelemente gemäß Fig. 27a und Fig. 27b in einer zweiten relativen Position,
- Fig. 27e: die beiden Blendenelemente gemäß Fig. 27a und Fig. 27b in einer dritten relativen Position,
- Fig. 28: eine schematische Darstellung eines Längsschnitts durch ein Ausführungsbeispiel einer nicht erfindungsgemäßigen Vorrichtung zum Heben und Positionieren eines Objekts mit ersten Mitteln zur Erzeugung eines Unterdrucks und zweiten Mitteln zum Variieren des Unterdrucks, welche als zweiter Impeller zur Erzeugung eines Blaswinds ausgebildet sind,
- Fig. 29: eine schematische Darstellung eines Längsschnitts durch ein weiteres Ausführungsbeispiel einer nicht erfindungsgemäßigen Vorrichtung zum Heben und Positionieren eines Objekts mit ersten Mitteln zur Erzeugung eines Unterdrucks und zweiten Mitteln zum Variieren des Unterdrucks, welche als weiterer Impeller mit elektromagnetischer Bremse ausgebildet sind,
- Fig. 30a: einen Längsschnitt und eine Draufsicht auf ein weiteres Ausführungsbeispiel einer nicht erfindungsgemäßigen Vorrichtung zum Heben und Positionieren eines Objekts mit ersten Mitteln zur Erzeugung eines Unterdrucks und zweiten Mitteln zum Variieren des Unterdrucks vor der Saugöffnung, welche als zwei gegeneinander verdrehbare Gehäuse mit seitlichen Öffnungen ausgebildet sind,
- Fig. 30b: eine Explosionsdarstellung der Vorrichtung gemäß Fig. 30a,
- Fig. 30c: eine Draufsicht auf die Vorrichtung gemäß Fig. 30b,
- Fig. 31a: eine schematische Darstellung eines Längsschnitts durch ein weiteres Ausführungsbeispiel nicht erfindungsgemäßigen Vorrichtung zum Heben und Positionieren eines Objekts mit ersten Mitteln zur Erzeugung eines Unterdrucks und zweiten Mitteln zum Variieren des Unterdrucks, welche als Schieber ausgebildet sind, mit dem Schieber in einer geöffneten Position und einer Darstellung der erzeugten Luftströme,
- Fig. 31b: die Vorrichtung gemäß Fig. 31a mit dem Schieber in geschlossener Position und
- Fig. 31c: ein Vergleich der durch die Vorrichtungen gemäß Fig. 31a und Fig. 31b erzeugten Unterdrücke.

In den Figuren bezeichnen gleiche Bezugsziffern gleiche oder funktionsgleiche Teile, wobei zur besseren Übersicht nicht sämtliche Bezugsziffern in sämtlichen Figuren angegeben sind.

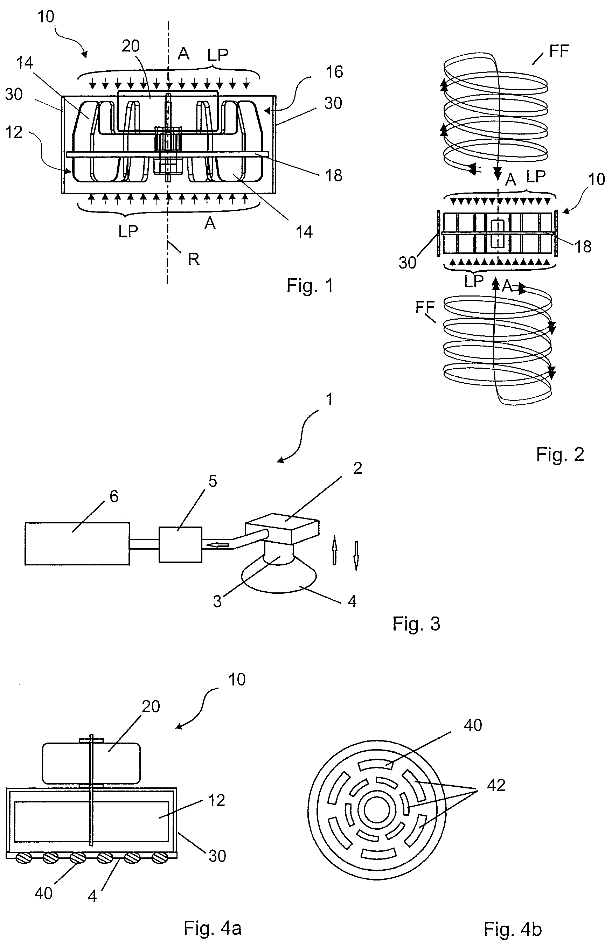

Figuren 1 und 2 zeigen einen Vortex-Attraktor 10 mit einem unteren Impeller 12, welcher durch einen Motor 20 angetrieben wird. Der untere Impeller 12 weist ein Trennelement 18 auf, welches durch den Motor 20 angetrieben wird, und eine Vielzahl von sich radial auf dem Trennelement 18 erstreckenden Flügeln 14, welche im Wesentlichen senkrecht auf dem Trennelement 18 angeordnet sind. Die Flügel 14 rotieren um eine Rotationsachse R. In einer Ausführungsform ist ein ähnlich ausgestalteter oberer Impeller 16 mit Flügeln 14 auf der gegenüberliegenden Seite des Trennelements 18 vorgesehen. In einer Ausführungsform wird einer der beiden Impeller 12, 16, vorzugsweise der obere Impeller 16, zur Kühlung des Motors 20 verwendet. Das Trennelement 18 kann symmetrisch zwischen dem oberen Impeller 16 und dem unteren Impeller 12 angeordnet sein, vorzugsweise ist in einer Ausführungsform jedoch der obere Impeller 16 zur Kühlung des Motors 20 von geringerer Höhe als der untere Impeller 12, welcher den Unterdruck zum Ansaugen eines Objekts bereitstellt. Insbesondere weist in einer Ausführungsform der Vortex-Attraktor 10 lediglich den unteren Impeller 12 zur Erzeugung eines Unterdrucks mittels eines Wirbelwinds auf. Dabei wird insbesondere eine Anziehungskraft A auf ein nicht dargestelltes Objekt ausgeübt. Der Motor 20 kann ein Gleichstrommotor oder ein Wechselstrommotor sein. Beispielsweise ist der Motor 20 als bürstenloser Gleichstrommotor oder als Schrittmotor ausgebildet.

Die Flügel 14 können verschiedene Formen aufweisen und beispielsweise schaufelförmig gebogen sein. In einer Ausführungsform sind die Flügel 14 jedoch im Wesentlichen gerade und flach ausgebildet und insbesondere radial angeordnet. Dadurch wird ein Drehen der Impeller 12, 16 in beide Richtungen ermöglicht.

In einer weiteren Ausführungsform können die Flügel 14 des oberen Impellers 16 eine Ausnehmung in einem oberen, inneren und radial erstreckenden Bereich aufweisen, in welcher beispielsweise der Motor 20 angeordnet sein kann. Alternativ kann der Motor selbstverständlich auch außerhalb des oberen Impellers 16 angeordnet sein.

Der Vortex-Attraktor 10 kann ein Gehäuse 30 aufweisen, welches um die äußeren Kanten der Trennwand 18, sofern diese Trennwand 18 vorhanden ist, und die äußeren Kanten der Flügel 14 angeordnet ist. Das Gehäuse 30 kann als Schale oder Ring ausgebildet sein, welches von den Flügeln 14 getrennt ausgebildet ist, um ein besonders leichtes Impellerrad bereitzustellen. Alternativ kann der Impeller 12 und/oder der Impeller 16 auch derart ausgebildet sein, dass ein Ring direkt an den Außenkanten der Flügel 14 angeordnet ist, welcher das Gehäuse 30 bildet.

Als Vortex-Attraktor 10 ist grundsätzlich jede Vorrichtung anzusehen, welche ein Wirbelwind FF erzeugt. Die sich insbesondere radial erstreckenden Flügel 14 erzeugen den Luftstrom FF, welcher insbesondere wirbelwindartig ausgebildet ist und eine Unterdruckregion LP vor dem Impeller 12 erzeugt. Der vertikale Luftstrom weist eine Rotationsachse auf, welche insbesondere mit der Rotationsachse R der Flügel 14 übereinstimmt. Die Anziehungskraft A wird in der Unterdruckregion LP erzeugt, welche es ermöglicht, dass der Vortex-Attraktor 10 ein Objekt anziehen kann und/oder an die Oberfläche eines Objekts heran bewegt wird, falls der Vortex-Attraktor 10 in seiner Position nicht fixiert ist. Vortex-Attraktoren 10 sind besonders geeignet, an ebenen und auch nichtebenen Oberflächen von Objekten anzugreifen und gegebenenfalls das Objekt im Raum zu bewegen. In einer Ausführungsform sind der obere Impeller 16 und der untere Impeller 12 aus leichten Material, wie beispielsweise Plastik, gefertigt und haben vorzugsweise einen Durchmesser von etwa 50 mm.

Figur 3 zeigt den schematischen Aufbau eines nicht erfindungsgemäßigen Ausführungsbeispiels einer Vorrichtung 1 zum Heben und Positionieren eines Objekts mit ersten Mitteln 2 zur Erzeugung eines Unterdrucks mittels eines Wirbelwinds zum Ansaugen eines Objekts. Die ersten Mittel 2 können als Vortex-Attraktor 10 gemäß einem der in der vorliegenden Anmeldung beschriebenen Ausführungsbeispiele ausgestaltet sein.
Die ersten Mittel 2 sind dabei in einem Gehäuse 3 angeordnet, welches eine im Wesentlichen runde Saugöffnung 4 aufweist. Die Saugöffnung 4 kann dabei direkt im Anschluss an ein zylindrisches Gehäuse 3 ausgebildet sein. Alternativ kann die Saugöffnung 4 auch in einem sich konisch aufweitenden, sich an das Gehäuse 3 anschließenden Element ausgebildet sein. An die ersten Mittel 2 ist eine nur schematisch angedeutete Mechanik 5 angeschlossen, mit welcher die Vorrichtung 1 im Raum bewegt werden kann. Weiterhin ist die Vorrichtung 1 mit einer Regeleinheit 6 verbunden, die die ersten Mittel 2 sowie die Mechanik 5 und gegebenenfalls weitere Komponenten der Vorrichtung 1, die nachfolgend beschrieben werden, ansteuert und regelt.

Vor der Saugöffnung 4 ist in einer Ausführungsform zumindest ein Reibelement angeordnet, welches wie nachfolgend, insbesondere anhand der Figuren 4 bis 16 und 26, beschrieben ausgestaltet sein kann, welches eine verbesserte Haftung zwischen dem Objekt und der Saugöffnung 4 ermöglicht, um unerwünschte relative Verschiebungen zwischen dem Objekt und der Saugöffnung 4 zu vermeiden.

Figur 4a zeigt einen Längsschnitt durch, Figur 4b eine Draufsicht auf einen Vortex-Attraktor 10, der in seinem Gehäuse 30 lediglich einen Impeller 12 aufweist, wobei der Motor 20 oberhalb des Gehäuses 30 axial versetzt und vorzugsweise konzentrisch zu dem Impeller 12 angeordnet ist. Das Gehäuse 30 ist zylindrisch ausgebildet und zu einer Seite abgeschlossen, während die andere Seite offen ausgebildet ist und die Saugöffnung 4 bildet. Vor der Saugöffnung 4 ist ein erstes Reibelement 40 angeordnet, welches aus mehreren ringsegmentförmigen Abschnitten 42 von mehreren konzentrisch zueinander angeordneten Ringen gebildet ist.

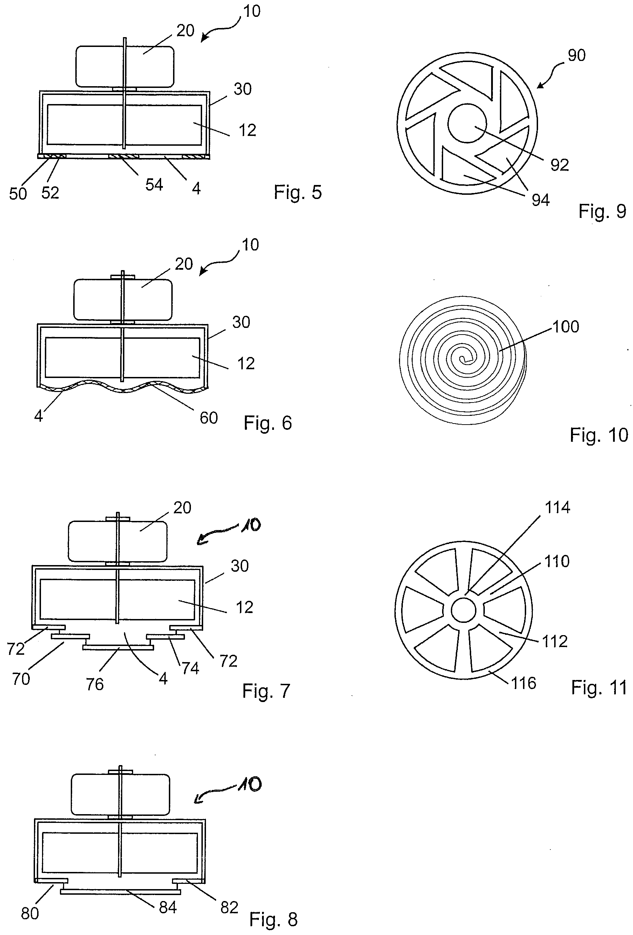

Figur 5 zeigt einen Längsschnitt durch den Vortex-Attraktor 10 mit einem zweiten Reibelement 50, welches ein am Rand der Saugöffnung 4 umlaufendes ringförmiges Element 52 und ein konzentrisch, vorzugsweise in der gleichen Ebene, dazu angeordnetes rundes Element 54 aufweist.

Figur 6 zeigt einen Längsschnitt durch den Vortex-Attraktor 10 mit einem dritten Reibelement 60, welches eine dreidimensionale Struktur aufweist. Das Reibelement 60 ist insbesondere wellenförmig ausgebildet und weist beispielsweise konzentrisch zueinander angeordnete Wellen auf. Die Amplitude der Wellen verläuft dabei insbesondere parallel zur Rotationsachse R des Impellers 12.

Figur 7 zeigt einen Längsschnitt durch den Vortex-Attraktors 10 mit einem vierten Reibelement 70, welches ebenfalls eine dreidimensionale Struktur aufweist. Das vierte Reibelement 70 weist einen am Rand der Saugöffnung 4 angeordneten umlaufenden Ring 72 auf sowie ein weiteres ringförmiges Element 74 mit einem Außendurchmesser, welcher kleiner ist als der Innendurchmesser des ringförmigen Elements 72, jedoch mit einem Innendurchmesser, welcher größer ist als der Innendurchmesser des ringförmigen Elements 72, und ein rundes Element 76 mit einem Außendurchmesser, welcher größer ist als der Innendurchmesser des ringförmigen Elements 74. Das runde Element 76 und die ringförmigen Elemente 74, 72 sind koaxial zueinander zugeordnet und zwar derart, dass das ringförmige Element 74 axial versetzt zu dem ringförmigen Element 72 und axial versetzt zu dem runden Element 76 zwischen dem runden Element 76 und dem ringförmigen Element 72 angeordnet ist.

Figur 8 zeigt einen Längsschnitt durch den Vortex-Attraktor 10 mit einem fünften Reibelement 80, welches ein am Rand der Saugöffnung 40 angeordnetes ringförmiges Element 82 und ein axial versetzt dazu angeordnetes rundes Element 84 aufweist, wobei der Außendurchmesser des runden Elements größer ist als der Innendurchmesser des ringförmigen Elements und somit das ringförmige Element 82 und das runde Element 84 in radialer Richtung überlappend aneinander angeordnet sind.

Figur 9 zeigt die Draufsicht auf ein sechstes Reibelement 90, welches in einer runden Abdeckung eine runde zentrisch angeordnete Ausnehmung 92 und sechs deckungsgleiche, durch jeweils zwei Sekanten durch die Saugöffnung 4 und ein Kreisbogensegment um die Rotationsachse begrenzte, im Randbereich der Abdeckung ausgebildete Ausnehmungen 94 aufweist.

Figur 10 zeigt die Draufsicht auf ein siebtes Reibelement 100, welches als spiralförmige Wicklung ausgebildet ist. Diese kann in der Ebene der Saugöffnung 4, davor oder dahinter liegen oder auch dreidimensional ausgebildet sein.

Figur 11 zeigt die Draufsicht auf ein achtes Reibelement 110, welches zwei über radial verlaufende Stege 112 miteinander verbundene ringförmige Elemente 114, 116 aufweist.

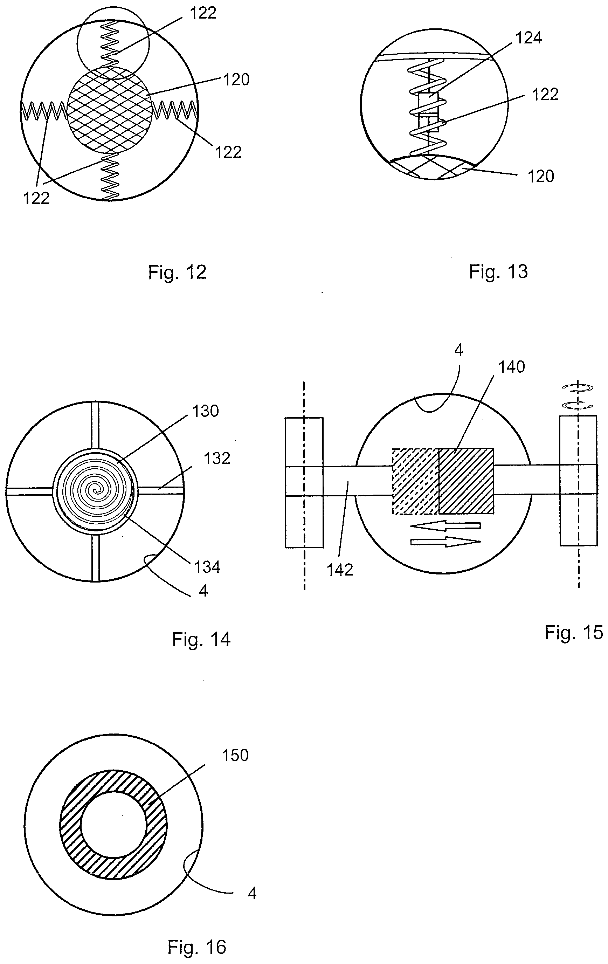

Figur 12 zeigt die Draufsicht auf ein neuntes Reibelement 120, welches als zentrisch in der Saugöffnung 4 angeordnetes Element ausgebildet ist, welches über mehrere federnde Elemente 122 mit dem Rand der Saugöffnung 4 verbunden ist. Die federnden Elemente 122 können, wie in Figur 13 dargestellt, zusätzlich ein dämpfendes Element 124 aufweisen.

Figur 14 zeigt eine Draufsicht auf ein zehntes Reibelement 130, welches als Spiralfeder ausgebildet ist, die zentrisch in, hinter oder vor der Saugöffnung 4 angeordnet ist und beispielsweise mit der äußeren Wicklung am Rand der Saugöffnung 4 angeordnet sein kann oder, wie in Figur 14 dargestellt, mit der äußeren Wicklung in einem über Stege 132 mit dem Rand der

Saugöffnung 4 verbundenen ringförmigen Element 134 angeordnet sein kann.
Figur 15 zeigt ein elftes Reibelement 140, welches an einer vor der Saugöffnung 4 angeordneten Stange 142 gleitend gelagert angeordnet ist, durch welches beispielsweise versetzen des an der Saugöffnung 4 gehaltenen Objekts relativ zu der Saugöffnung 4 ausgeglichen werden können.
Figur 16 zeigt eine Draufsicht auf ein zwölftes Reibelement 150, welches als ringförmiges Element vor oder in der Saugöffnung 4 angeordnet ist, beispielsweise mit Hilfe von Stegen oder Ähnlichem.

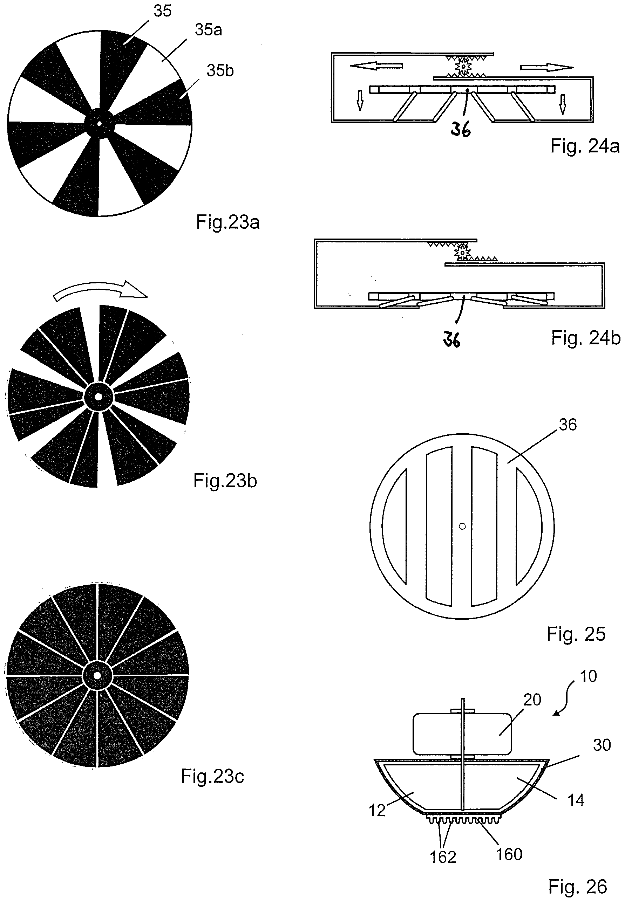

Figur 26 zeigt einen Längsschnitt durch einen nicht erfindungsgemäßigen Vortex-Attraktor 10, bei welchem sich die Flügel 14 des Impellers 12 zur Saugöffnung 4 hin verjüngen und beispielsweise eine konvexe Geometrie im Längsschnitt gebildet ist. Vor der Saugöffnung 4 ist ein dreizehntes Reibelement 160 angeordnet, welches eine dreidimensionale Struktur in Form von Noppen 162 aufweist. Die Reibelemente 40, 50, 60, 70, 80, 90, 100, 110, 120, 130, 140, 150, 160 überdecken weniger als 60 % der Fläche der Saugöffnung 4, um den durch die ersten Mittel zur Erzeugung eines Wirbelwinds, welche insbesondere als Impeller 12 ausgebildet sind, erzeugten Unterdruck möglichst wenig zu beeinträchtigen. Die Reibelemente 40, 50, 60, 70, 80, 90, 100, 110, 120, 130, 140, 150, 160 weisen eine Höhe auf, welche vorteilhafterweise geringer als 4 % des Durchmessers der Saugöffnung 4 sein sollte, um den durch den Impeller 12 erzeugten Unterdruck möglichst wenig zu beeinträchtigen.

Sämtliche der Reibelemente 40, 50, 60, 70, 80, 90, 100, 110, 120, 130, 140, 150, 160 sind dazu vorgesehen, eine große Reibungskraft zwischen ihnen und dem durch den Vortex-Attraktor 10 gehaltenen Objekt zu erzeugen. Dazu sind die Reibelemente 40, 50, 60, 70, 80, 90, 100, 110, 120, 130, 140, 150, 160 beispielsweise elastisch ausgebildet, insbesondere aus Gummi gefertigt, weisen eine raue oder strukturierte Oberfläche auf, beispielsweise in Form von Strukturelementen wie beispielsweise Rippen, Dellen und/oder Noppen, oder können dreidimensionale Strukturen aufweisen. Die Strukturen können insbesondere in einem Raster oder geometrisch regelmäßig angeordnet sein. Die Reibelemente 40, 50, 60, 70, 80, 90, 100, 110, 120, 130, 140, 150, 160 können als Gitter ausgebildet sein oder wellenförmige Strukturen aufweisen.
Zur Verringerung der durch die Reibelemente 40, 50, 60, 70, 80, 90, 100, 110, 120, 130, 140, 150, 160 bedeckten Oberfläche können die Reibelemente 40, 50, 60, 70, 80, 90, 100, 110, 120, 130, 140, 150, 160 eine perforierte Oberfläche aufweisen oder aus einem luftdurchlässigen Material gefertigt sein. Jedes der Reibelemente 40, 50, 60, 70, 80, 90, 100, 110, 120, 130, 140, 150, 160 kann in seinem axialen Abstand zu der Ebene der Saugöffnung 4 variabel angeordnet sein oder zumindest ein Element aufweisen, welches in seinem axialen Abstand zu der Ebene der Saugöffnung 4 variabel ausgestaltet ist.

Nachfolgend werden nicht erfindungsgemäßigen Ausführungsbeispiele von Vortex-Attraktoren 10 beschrieben, welche ohne Reibelemente dargestellt sind und welche zweite Mittel aufweisen, um den erzeugten Unterdruck variieren zu können. Selbstverständlich kann jede dieser Vorrichtungen 10 eines oder mehrere der zuvor beschriebenen Reibelemente 40, 50, 60, 70, 80, 90, 100, 110, 120, 130, 140, 150, 160 aufweisen.

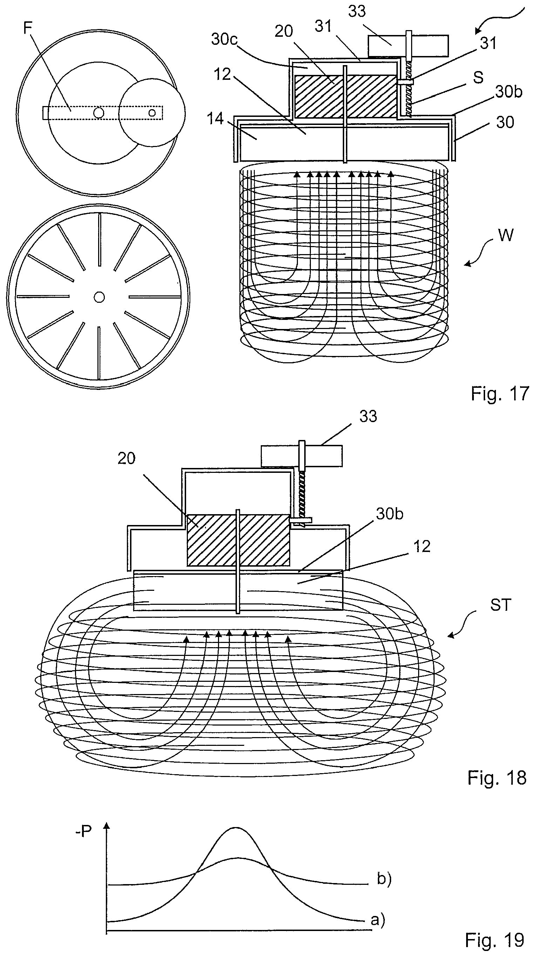

Figur 17 zeigt ein Ausführungsbeispiel des Vortex-Attraktors 10, welcher ein Gehäuse 30 mit einer Rückwand 30b aufweist, wobei in der Rückwand 30b eine Ausnehmung 30c angeordnet ist, in welche der Motor 20 eingesetzt ist. Das Gehäuse 30 ist dabei relativ zu den Flügeln 14 des Impellers 12 mittels eines Spindelantriebs 31 entlang eines Schafts S bewegbar, insbesondere mittels eines weiteren Motors 33, welcher als Schrittmotor ausgebildet sein kann.

Figur 17 zeigt ein Vortex-Attraktor 10 mit dem Gehäuse 30 in einer derartigen Position, in welcher das Gehäuse 30 die Flügel 14 des Impellers 12 umgibt. Figur 18 zeigt den Vortex-Attraktor 10 gemäß Figur 17, bei welchem das Gehäuse 30 entlang des Schafts S aufwärts bewegt wurde, sodass das Gehäuse 30 axial über den Flügeln 14 des Impellers 12 angeordnet ist. Durch die Bewegung des Gehäuses 30 kann die Richtung und die absolute Intensität des Unterdrucks des Vortex-Attraktors 10 variiert werden, wie insbesondere in Figur 19 erkennbar, in welchem die mit b bezeichnet Kurve den Unterdruck des Vortex-Attraktors 10 mit dem Gehäuse 30 in nach oben geschobener Position (vergleiche Figur 18) darstellt, während die mit a bezeichnete Kurve den Unterdruck des Vortex-Attraktors 10 mit dem Gehäuse 30 in heruntergeschobener Position (vergleiche Figur 17) darstellt.

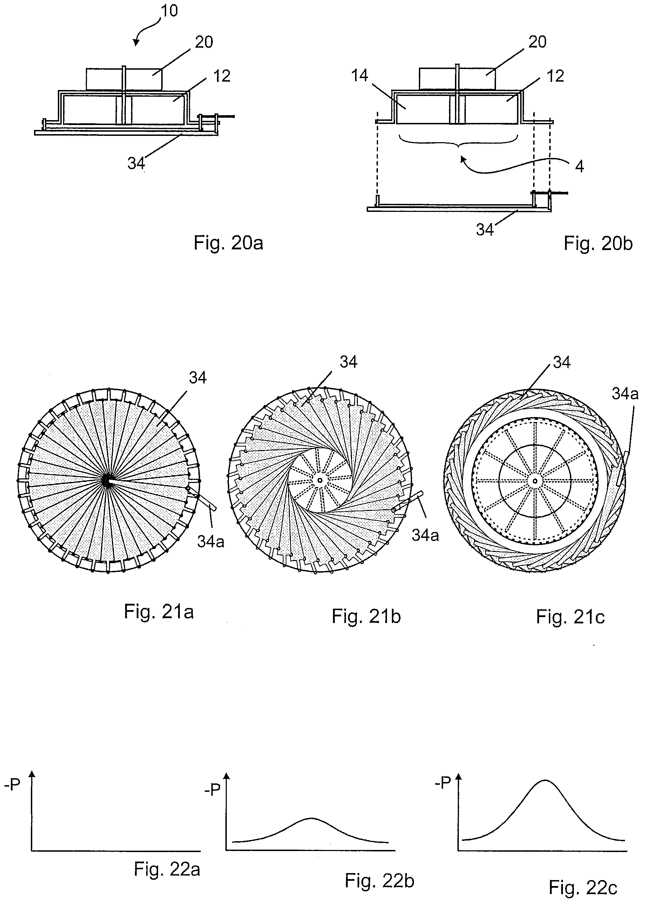

In den Figuren 20 bis 22 ist ein weiteres Ausführungsbeispiel eines Vortex-Attraktors 10 dargestellt, welcher zweite Mittel aufweist, um die Intensität des Unterdrucks variieren zu können. Der Vortex-Attraktor 10 weist eine Irisblende 34 auf, welche vor der Saugöffnung 4 des Vortex-Attraktors 10 angeordnet ist. Die Irisblende 34 kann mittels eines Hebels 34a geöffnet und geschlossen werden, wobei der Hebel 34a entweder manuell oder mittels eines Motors betätigt werden kann.

Figur 21a ist eine Draufsicht auf den Vortex-Attraktor 10 gemäß Figur 20a, wobei die Irisblende 34 geschlossen ist. Figur 21b zeigt die Irisblende 34 in teilweise geöffneter Position und Figur 21c zeigt die Irisblende 34 in geöffneter Position.

Die Figuren 22a, 22b und 22c zeigen den durch den Vortex-Attraktor 10 gemäß Figur 20a erzeugten Unterdruck bei den verschiedenen Positionen der Irisblende 34 wie in den Figuren 21a, 21b und 21c dargestellt.

Die Figuren 23a, 23b und 23c zeigen eine weitere Möglichkeit, den vor der Saugöffnung 4 erzeugten Unterdruck variabel auszugestalten. Dazu werden vor der Saugöffnung 4 zwei Blendenelemente 35 um eine gemeinsame Rotationsachse, die insbesondere mit der Rotationsachse des Wirbelwinds übereinstimmt, drehbar vor der Saugöffnung 4 angeordnet. Die Blendenelemente 35 weisen offene Bereiche 35a und geschlossene Bereiche 35b auf, die vorliegend insbesondere kreissegmentförmig ausgebildet sind und abwechselnd im gleichen Winkelabstand zueinander angeordnet sind.

Figur 23a zeigt die beiden Blendenelemente 35 in einer derartigen relativen Anordnung, bei welcher die geschlossenen Bereiche 35b direkt übereinander angeordnet sind und entsprechend die offenen Bereiche 35a ebenfalls direkt übereinander angeordnet sind. In dieser relativen Position der beiden Blendenelemente 35 zueinander ist die Saugöffnung 4 weitestmöglich offen. Wie in Figur 23b dargestellt, werden die beiden Blendenelemente 35 gegeneinander verdreht. Die geschlossenen Bereiche 35b des einen Blendenelements 35 bedecken teilweise die geöffneten Bereiche 35a des anderen Blendenelements 35 und umgekehrt, sodass die geöffnete Fläche vor der Saugöffnung 4 verringert wird. Wie in Figur 23c dargestellt, sind die beiden Blendenelemente 35 derart relativ zueinander angeordnet, dass die geschlossenen Bereiche 35b die offenen Bereiche 35a des jeweils anderen Blendenelements 35 abdecken, sodass die Saugöffnung 4 vollständig geschlossen ist. Auf diese Weise kann der vor der Saugöffnung 4 erzeugte Unterdruck variiert werden.

In den Figuren 24a, 24b und 25 wird eine weitere Möglichkeit zur Variation des Unterdrucks vor der Saugöffnung 4 dargestellt. Dazu ist vor der Saugöffnung 4 ein Blendenelement 36 wie in Figur 25 dargestellt angeordnet. Das Blendenelement 36 ist in seiner axialen Position verschiebbar vor der Saugöffnung 4 angeordnet. Die axiale Verschiebung erfolgt dadurch, dass zwei über ein Zahnrad miteinander gekoppelte Elemente auseinander gezogen werden, wodurch das Element 36 axial bewegt wird und der Luftstrom statt um das Element 36 herum lediglich durch das Element 36 hindurchströmen kann, wodurch der vor der Saugöffnung 4 erzeugte Unterdruck variabel ausgestaltet ist.

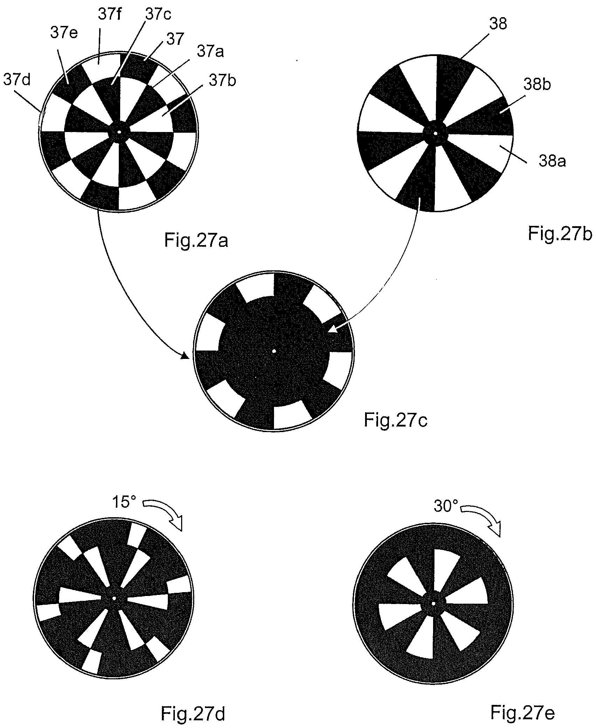

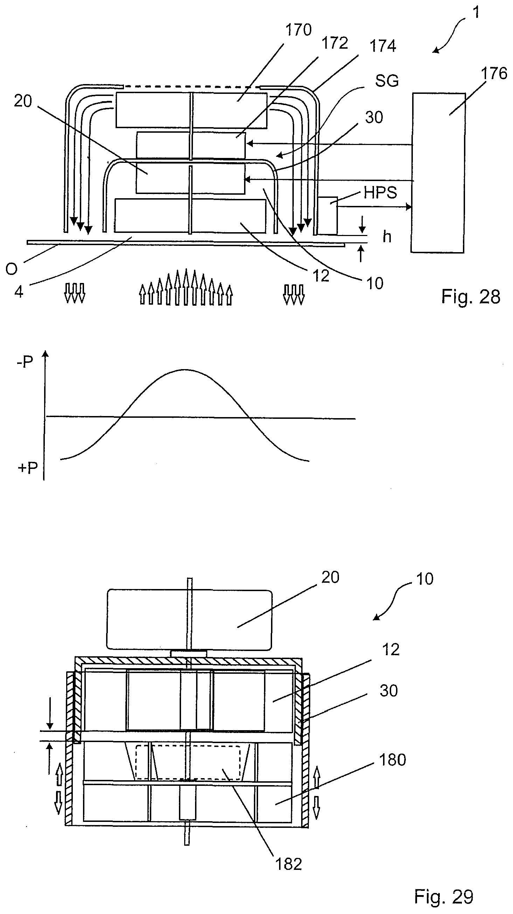

Die Figuren 27a bis 27e zeigen eine weitere Möglichkeit zur Variation des Unterdrucks vor der Saugöffnung 4. Ähnlich zu dem in den Figuren 23a bis 23c dargestellten Ausführungsbeispiele werden zwei Blendenelemente 37, 38 um eine gemeinsame Rotationsachse drehbar zueinander vor der Saugöffnung 4 angeordnet. Das Blendenelement 38 entspricht dabei dem Blendenelement 35 gemäß Figur 23a und weist offene Bereiche 38a und geschlossene Bereiche 38b auf, welche im Wesentlichen kreissegmentförmig und abwechselnd im gleichen Winkelabstand zueinander ausgebildet sind. Das Blendenelement 37 weist in einem kreisförmigen inneren Bereich 37a, dessen Radius kleiner ist als der Radius des Blendenelements 37, eine analoge Ausgestaltung mit offenen Breichen 37b und geschlossenen Bereichen 37c auf, welche kreissegmentförmig und abwechselnd im gleichen Winkelabstand zueinander ausgebildet sind. In einem an den inneren Bereich 37a anschließenden ringförmigen Bereich 37d wechseln ebenfalls geschlossene Bereiche 37e und offene Bereiche 37f in gleichen Winkelabstand zueinander ab, wobei jedoch in dem Ringsegment des ringförmigen Bereichs 37d, bei welchem in dem inneren Bereich 37a ein geschlossener Bereich 37c angeordnet ist, in dem ringförmigen Bereich 37d ein offener Bereich 37f angeordnet ist, während in den Ringsegmenten des ringförmigen Bereichs 37d, bei welchem in dem inneren Bereich 37a ein offener Bereich 37b angeordnet ist, in dem äußeren ringförmigen Bereich 37d ein geschlossener Bereich 37e angeordnet ist. Die beiden Blendenelemente 37 und 38 sind relativ zueinander verdrehbar. Dabei kann eines der beiden Blendenelemente 37, 38, beispielsweise das Blendenelement 37, starr vor der Saugöffnung 4 angeordnet werden. Bei Drehung des Blendenelements 38 relativ zu dem Blendenelement 37 kommen in einer Position die geschlossenen Bereiche 38b des Blendenelements 38 vor den geöffneten Bereichen 37b des inneren Bereichs 37a des Blendenelements 37 zu liegen, sodass die Fläche des inneren Bereichs 37a vor der Saugöffnung 4 vollständig geschlossen ist (vergleiche Figur 27c), während die geschlossenen Bereiche 38b des Blendenelements 38 im äußeren ringförmigen Bereich 37d mit den geschlossenen Flächen 37e des Blendenelements 37 zur Deckung kommen, sodass im äußeren ringförmigen Bereich 37d geöffnete und geschlossenen Bereiche vor der Saugöffnung 4 wechseln (vergleiche Figur 27c). In einer anderen Position kommen die geschlossenen Bereich 38b des Blendenelements 38 mit den geöffneten Flächen 37f des äußeren ringförmigen Bereichs 37d des Blendenelements 37 zur Deckung, während die geöffneten Bereiche 38a des Blendenelements 38 mit den geöffneten Bereichen 37b des inneren Bereichs 37a des Blendenelements 37 fluchten, sodass die Fläche im äußeren ringförmigen Bereich 37d vor der Saugöffnung 4 vollständig geschlossen ist, während im inneren Bereich 37a des Blendenelements 37 vor der Saugöffnung 4 geöffnete mit geschlossenen Bereichen abwechseln. Einerseits kann auf diese Art und Weise bereits der Unterdruck vor der Saugöffnung 4 variiert werden, da der geöffnete bzw. geschlossene Anteil der Fläche der Saugöffnung 4 variiert. Besonders bevorzugt wird diese Blendenstruktur in Kombination mit der nachfolgend anhand von Figur 28 beschriebenen Vorrichtung 1 verwendet.

Figur 28 zeigt schematisch eine Vorrichtung 1 mit ersten Mitteln 2 zur Erzeugung eines Unterdrucks, welche insbesondere als Vortex-Attraktor 10 gemäß einem der zuvor beschriebenen Ausführungsbeispiele ausgestaltet ist. Der Vortex-Attraktor 10 ist insbesondere in dem Gehäuse 30 angeordnet, welches nach oben geschlossen ist, wobei der Motor 20 innerhalb des Gehäuses 30 axial oberhalb des Impellers 12 angeordnet ist. Dabei ist der Motor 20 insbesondere auf der der Saugöffnung 4 gegenüberliegenden Seite des Impellers 12 angeordnet. Die der Saugöffnung 4 abgewandte Wand des Gehäuses 30 bildet eine Trennwand zu einem zweiten Impeller 170, welcher mittels eines Motors 172 angetrieben ist. Dabei sind der Motor 172 und der zweite Impeller 170 axial zueinander angeordnet, wobei der Motor 172 an die rückwärtige Wand des Gehäuses 30 angrenzende angeordnet ist. Der zweite Impeller 170 und der Motor 172 sind in einem Gehäuse 174 angeordnet, welches im Wesentlichen zylindrisch ausgebildet ist und vorzugsweise koaxial zu dem ebenfalls zylindrischen Gehäuse 30 ausgerichtet ist. Dabei weist das Gehäuse 174 einen größeren Durchmesser auf als das Gehäuse 30. Der zweite Impeller 170 weist jedoch ähnliche Ausmaße auf wie der Impeller 12. Der zweite Impeller 170 erzeugt somit einen Luftstrom, welcher seitlich aus dem zweiten Impeller 170 austritt und durch das ringförmige Volumen zwischen der Außenwand des Gehäuses 30 und der Innenwand des Gehäuses 174 konzentrisch um die Saugöffnung 4 austritt und einen Blaswind darstellt, der der anziehenden Kraft des durch den Impeller 12 erzeugten Wirbelwinds entgegenwirkt. Bei geeigneter Ansteuerung des Impellers 170 und des Impellers 12 ist es möglich, ein vor der Saugöffnung 4 angeordnetes Objekt berührungslos in der Schwebe zu halten, sofern sich die anziehende Kraft des mit dem ersten Impeller 12 erzeugten Wirbelwinds und die abstoßende Kraft des mit dem zweiten Impeller 170 erzeugten Blaswinds ausgleichen. Zur Ansteuerung der Impeller 12, 170 kann ein Regler 176 vorgesehen sein. Die Stärke des Unterdrucks des Impellers 12 bzw. der abstoßenden Kraft des Impellers des zweiten Impellers 170 kann, wie zuvor beschrieben, mit Hilfe der Blenden 37 und 38, die in den Figuren 27a und 27b dargestellt sind, ebenfalls variiert werden.

Der vor der Saugöffnung 4 erzeugte Unterdruck des Impellers 12 ist auch variabel, wenn Mittel vorgesehen sind, die Drehgeschwindigkeit des Impelllers 12 zu beeinflussen und beispielsweise den Impeller 12 instantan zu stoppen. Ein Ausführungsbeispiel eines derartigen Vortex-Attraktors 10 ist in Figur 29 dargestellt. In dem Gehäuse 30, in welchem der Impeller 12 angeordnet ist, der durch den außerhalb des Gehäuses 30 angeordneten Motor 20 angetrieben wird, ist axial beabstandet in einem Abstand d und mit gleicher Rotationsachse ein weiterer Impeller 180 angeordnet, welcher nicht über einen Motor angetrieben wird, sondern lediglich durch den mittels des Impellers 12 erzeugten Wirbelwind angetrieben wird. Die Drehgeschwindigkeit des Impellers 180 ist abhängig von dem Abstand d zwischen dem Impeller 12 und dem Impeller 180. Daher ist vorzugsweise der Abstand d zwischen den beiden Impellern 12, 180 variabel ausgestaltet. Der Impeller 180 weist eine elektromagnetische Bremse 182 auf, mit welcher die Drehbewegung des Impellers 180 instantan gestoppt werden kann, was ebenfalls zu einem instantanen Stopp der Drehbewegung des Impeller 12 und einem abrupten Abbruch der Anziehungskraft des Vortex-Attraktors 10 führt.

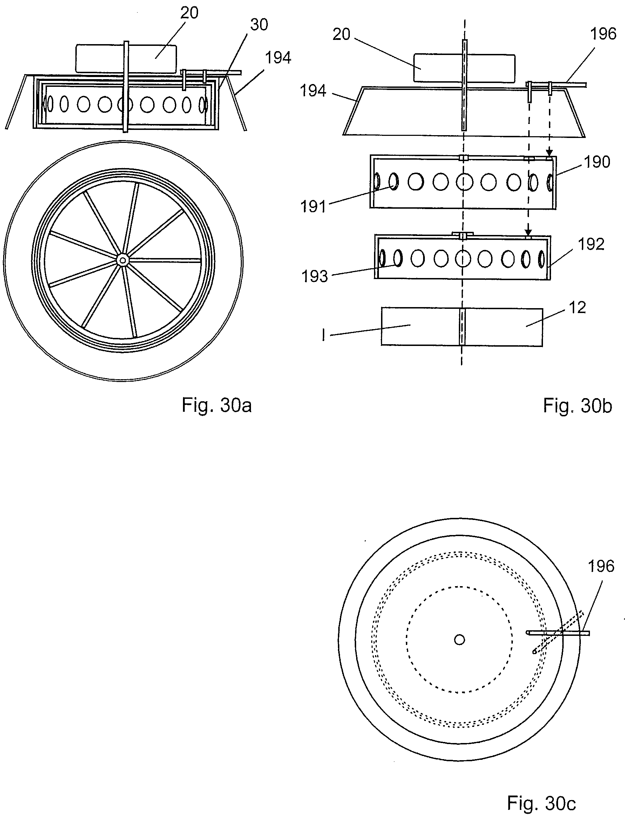

Eine alternative Ausführungsform zu der in Figur 28 dargestellten Vorrichtung 1, welche sowohl eine anziehende Kraft als auch eine abstoßende Kraft erzeugen kann, ist in den Figuren 30a bis 30c dargestellt. Diese Vorrichtung 1 weist lediglich einen Impeller 12 auf, welcher in einem Gehäuse 30 angeordnet ist, in dessen Seitenwandung Öffnungen angeordnet sind, die zumindest teilweise geschlossen werden können. Dazu weist das Gehäuse 30 in einer Ausführungsform zwei gegeneinander verdrehbare Gehäuseteile 190, 192 auf, welche umlaufend Öffnungen 191, 193 aufweisen, die entweder in einer relativen Position miteinander fluchtend ausgerichtet werden können oder in einer anderen relativen Position sich gegenseitig abdecken. Decken sich die Öffnungen 191, 193 gegenseitig ab, ist das Gehäuse 30 im Wesentlichen geschlossen und der Impeller 12 erzeugt einen Wirbelwind mit maximaler Anziehungskraft vor der Saugöffnung 4. Fluchten die Öffnungen 191, 193, weist das Gehäuse 30 in den Seitenwänden Öffnungen auf, durch die der von dem Impeller 12 erzeugte Luftstrom durch das Gehäuse 30 nach außen gelangen kann, wo es durch ein äußeres Gehäuse 194, welches im Wesentlichen konzentrischen zu dem Gehäuse 30 angeordnet ist und zur Saugöffnung 4 hin offen ist, in Richtung auf die Saugöffnung 4 umgelenkt wird, jetzt jedoch als Blaswind fungiert und dem durch den Impeller 12 erzeugten Unterdruck entgegen wirkt. Die Ausrichtung der beiden Gehäuseteile 190, 192 kann mittels eines Hebels 196 manuell oder motorgesteuert betätigt werden.

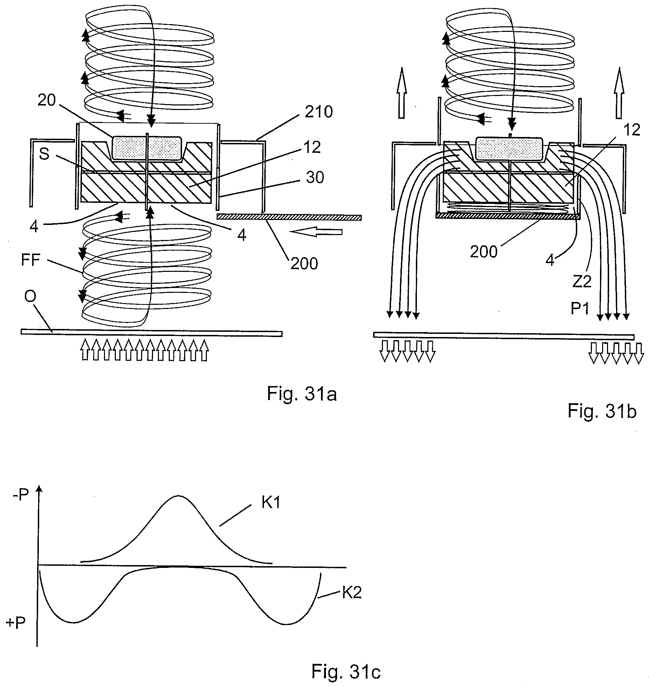

Eine weitere alternative Ausführungsform eines Vortex-Attraktors 10 mit zweiten Mitteln zur Variation des durch den Impeller 12 erzeugten Unterdrucks ist in den Figuren 31a bis 31c dargestellt. Die Saugöffnung 4 des Vortex-Attraktors 10 kann mittels eines Schiebers 200 abgedeckt werden. Figur 31a zeigt den Schieber 200 in der geöffneten Position, in welcher durch den Impeller 12 ein Wirbelwind FF erzeugt wird, welcher das Objekt O anzieht. In Figur 31b ist der Schieber 200 geschlossen. Gleichzeitig wird in der Seitenwand des Gehäuses 30 eine Öffnung geöffnet, so dass durch den Impeller 12 ein Blaswind erzeugt, der durch die Öffnungen in der Seitenwand des Gehäuses 30 austritt, durch ein äußeres Gehäuse 210 in Richtung auf die Saugöffnung 4 konzentrisch um diese herum umgelenkt wird und dort eine abstoßende Kraft auf das Objekt O ausübt. Figur 31c zeigt in dem Graphen K1 den auf das Objekt O ausgeübten Druck bei geöffnetem Schieber 200, wie in Figur 31a dargestellt, während der Graph K2 den auf das Objekt O ausgeübten Druck bei geschlossenem Schieber 200, wie in Figur 31b dargestellt, zeigt.

### Bezugszeichenliste

- 1: Vorrichtung
- 2: erste Mittel
- 3: Gehäuse
- 4: Saugöffnung
- 5: Mechanik
- 8: Regeleinheit

- 10: Vortex-Attraktor
- 12: Impeller
- 14: Flügel
- 16: Impeller
- 18: Trennwand
- 20: Motor

- 30: Gehäuse
- 30b: Rückwand
- 30c: Ausnehmung
- 31: Spindelantrieb
- S: Schaft
- 33: Motor
- 34: Irisblende
- 34a: Hebel
- 35: Blendenelement
- 35a: offener Bereich
- 35b: geschlossener Bereich
- 36: Blendenelement
- 37: Blendenelement
- 37a: innerer Bereich
- 37b: offener Bereich
- 37c: geschlossener Bereich
- 37d: ringförmiger Bereich
- 37e: geschlossener Bereich
- 37f: offener Bereich
- 38: Blendenelement
- 38a: offener Bereich
- 38b: geschlossener Bereich

- 40: erstes Reibelement
- 42: Abschnitte

- 50: zweites Reibelement
- 52: ringförmiges Element
- 54: kreisförmiges Element

- 60: drittes Reibelement

- 70: viertes Reibelement
- 72: ringförmiges Element
- 74: ringförmiges Element
- 76: kreisförmiges Element

- 80: fünftes Reibelement
- 82: ringförmiges Element
- 84: kreisförmiges Element

- 90: sechstes Reibelement
- 92: kreisförmiges Element
- 94: Elemente

- 100: siebtes Reibelement

- 110: achtes Reibelement
- 112: Steg
- 114: Ringelement
- 116: Ringelement

- 120: neuntes Reibelement
- 122: federndes Element
- 124: dämpfendes Element

- 130: zehntes Reibelement
- 132: Steg
- 134: ringförmiges Element

- 140: elftes Reibelement
- 142: Stange

- 150: zwölftes Reibelement

- 160: dreizehntes Reibelement
- 162: Noppen

- 170: zweiter Impeller
- 172: Motor
- 174: Gehäuse
- 176: Regler

- 180: Impeller
- 182: elektromagnetische Bremse

- 190: Gehäuseelement
- 191: Öffnung
- 192: Gehäuseelement
- 193: Öffnung
- 194: äußeres Gehäuse
- 196: Hebel
- 200: Schieber
- 210: äußeres Gehäuse

## Patentansprüche

1. Vorrichtung zum Heben und Positionieren eines Objekts, wobei die Vorrichtung erste Mittel zur Erzeugung eines Unterdrucks mittels eines Wirbelwinds zum Ansaugen des Objekts aufweist, wobei die ersten Mittel innerhalb eines Gehäuses angeordnet sind, welches eine Saugöffnung aufweist, und wobei das Gehäuse zumindest ein Reibelement aufweist, welches die Saugöffnung zumindest teilweise überdeckt, wobei das Reibelement weniger als 60 % der Fläche der Saugöffnung überdeckt und wobei das Reibelement ein ringförmiges Element aufweist,
**dadurch gekennzeichnet, dass** das Reibelement zusätzlich ein rundes Element aufweist, wobei das ringförmige Element axial versetzt zu dem runden Element in Richtung der Längsachse des Wirbelwinds angeordnet ist.

2. Vorrichtung nach einem dem vorhergehenden Ansprüche,
**dadurch gekennzeichnet, dass** das Reibelement eine Höhe aufweist, welche geringer als 4 % des Durchmessers der Saugöffnung ist.

3. Vorrichtung nach einem der vorhergehenden Ansprüche,
**dadurch gekennzeichnet, dass** das Reibelement elastisch ist und/oder aus Gummi gefertigt ist.

4. Vorrichtung nach einem der vorhergehenden Ansprüche,
**dadurch gekennzeichnet, dass** das Reibelement eine axialsymmetrische oder punktsymmetrische Geometrie aufweist oder ein Gitter ist.

5. Vorrichtung nach einem der vorhergehenden Ansprüche,
**dadurch gekennzeichnet, dass** das Reibelement zumindest ein ringförmiges oder ein rundes Element aufweist, welches vorzugsweise konzentrisch vor oder in der Saugöffnung angeordnet ist.

6. Vorrichtung nach einem der vorhergehenden Ansprüche,
**dadurch gekennzeichnet, dass** das Reibelement wellenförmig ausgebildet ist und vorzugsweise konzentrischen Wellen aufweist.

7. Vorrichtung nach einem der vorhergehenden Ansprüche,
**dadurch gekennzeichnet, dass** das Reibelement Strukturelemente wie beispielsweise Rippen, Dellen und/oder Noppen aufweist, wobei die Strukturelemente vorzugsweise in einem Raster angeordnet sind.

8. Vorrichtung nach einem der vorhergehenden Ansprüche,
**dadurch gekennzeichnet, dass** das Reibelement eine perforierte Oberfläche aufweist und/oder luftdurchlässig ist.

9. Vorrichtung nach einem der vorhergehenden Ansprüche,
**dadurch gekennzeichnet, dass** das Reibelement aus wenigstens zwei verschiedenen Materialien mit verschiedenen Reibkoeffizienten und/oder verschiedenen Oberflächenstrukturen und/oder verschiedenen Mustern und/oder verschiedenen Durchlässigkeitsgraden gefertigt ist.

10. Vorrichtung nach einem der vorhergehenden Ansprüche,
**dadurch gekennzeichnet, dass** zwei Reibelemente vorgesehen sind, wobei wenigstens eines der Reibelemente in seiner Position entlang der Längsachse des Wirbelwinds variierbar ist.

11. Vorrichtung nach einem der vorhergehenden Ansprüche,
**dadurch gekennzeichnet, dass** das ringförmige Element und das runde Element in radialer Richtung überlappend angeordnet sind.

12. Vorrichtung nach einem der vorhergehenden Ansprüche,
**dadurch gekennzeichnet, dass** das Reibelement an dem Gehäuse mittels eines federnden Elements angeordnet ist.

13. Vorrichtung nach einem der vorhergehenden Ansprüche,
**dadurch gekennzeichnet, dass** zwei Reibelemente vorgesehen sind, wobei die beiden Reibelemente in ihrem relativen Abstand zueinander und/oder in ihrem relativen Abstand zu dem Gehäuse variabel angeordnet sind.

14. Vorrichtung nach einem der vorhergehenden Ansprüche,
**dadurch gekennzeichnet, dass** die ersten Mittel als erster Impeller ausgebildet sind, wobei vorzugsweise der Impeller ein Impellerrad und ein Impellergehäuse aufweist, wobei das Impellerrad relativ zu dem Impellergehäuse in Richtung der Rotationsachse bewegbar ist.

15. Vorrichtung nach einem der vorhergehenden Ansprüche,
**dadurch gekennzeichnet, dass** ein Regler zum Regeln der ersten Mittel und vorgesehen ist, vorzugsweise zum Regeln, Einschalten, Abschalten, Verlangsamen und/oder Beschleunigen der ersten Mittel, vorzugsweise, wenn die ersten Mittel und/oder die zweiten Mittel als Impeller ausgebildet sind.

## Claims

1. Device to lift and position an object, wherein the device has first means for the generation of a vacuum by means of a vortex to suck in the object, wherein the first means are arranged within a housing which has a suction opening, and wherein the housing has at least one friction element which covers the suction opening at least partially, wherein the friction element covers less than 60% of the surface of the suction opening and wherein the friction element has an annular element,
**characterised in that**
the friction element additionally has a round element, wherein the annular element is arranged with an axial offset relative to the round element in the direction of the longitudinal axis of the vortex.

2. Device according to one of the preceding claims,
**characterised in that** the friction element has a height which is less than 4% of the diameter of the suction opening.

3. Device according to one of the preceding claims,
**characterised in that** the friction element is elastic and/or is produced from rubber.

4. Device according to one of the preceding claims,
**characterised in that** the friction element has axially symmetric or point symmetric geometry or is a grille.

5. Device according to one of the preceding claims,
**characterised in that** the friction element has at least one annular or one round element which is preferably arranged concentrically in front of or in the suction opening.

6. Device according to one of the preceding claims,
**characterised in that** the friction element is formed to be wave-shaped and preferably has concentric waves.

7. Device according to one of the preceding claims,
**characterised in that** the friction element has structural elements such as, for example, ribs, dents and/or nubs, wherein the structural elements are preferably arranged in a grid.

8. Device according to one of the preceding claims
**characterised in that** the friction element has a perforated surface and/or is permeable to air.

9. Device according to one of the preceding claims,
**characterised in that** the friction element is produced from at least two different materials having different coefficients of friction and/or different surface structures and/or different patterns and/or different degrees of permeability.

10. Device according to one of the preceding claims,
**characterised in that** two friction elements are provided, wherein at least one of the friction elements is able to be varied in its position along the longitudinal axis of the vortex.

11. Device according to one of the preceding claims,
**characterised in that** the annular element and the round element are arranged to overlap in the radial direction.

12. Device according to one of the preceding claims,
**characterised in that** the friction element is arranged on the housing by means of an elastic element.

13. Device according to one of the preceding claims,
**characterised in that** two friction elements are provided, wherein the two friction elements are arranged to vary in their relative distance to each other and/or in their relative distance to the housing.

14. Device according to one of the preceding claims,
**characterised in that** the first means are formed as a first impeller, wherein the impeller preferably has an impeller wheel and an impeller housing, wherein the impeller wheel is able to move relative to the impeller housing in the direction of the axis of rotation.

15. Device according to one of the preceding claims,
**characterised in that** a regulator for the regulation of the first means is provided, preferably for the regulation, switching on, switching off, deceleration and/or acceleration of the first means, preferably if the first means and/or the second means are formed as an impeller.

## Revendications

1. Dispositif de levage et de positionnement d'un objet comprenant des premiers moyens permettant d'obtenir une dépression au moyen d'un tourbillon pour permettre d'aspirer l'objet, dans lequel les premiers moyens sont logés à la partie interne d'un boîtier qui comporte une ouverture d'aspiration, et ce boîtier comporte au moins un élément de friction qui recouvre au moins partiellement cette ouverture d'aspiration, cet élément de friction recouvrant moins de 60% de la surface de l'ouverture d'aspiration et comprenant un élément annulaire,
**caractérisé en ce que**
l'élément de friction comprend en outre un élément circulaire, l'élément annulaire étant décalé axialement par rapport à l'élément circulaire en direction de l'axe longitudinal du tourbillon.

2. Dispositif conforme à l'une des revendications précédentes,
**caractérisé en ce que**
l'élément de friction a une hauteur qui est inférieure à 4 % du diamètre de l'ouverture d'aspiration.

3. Dispositif conforme à l'une des revendications précédentes,
**caractérisé en ce que**
l'élément de friction est élastique et/ou est réalisé en caoutchouc.

4. Dispositif conforme à l'une des revendications précédentes,
**caractérisé en ce que**
l'élément de friction a une géométrie présentant une symétrie par rapport à un axe ou une symétrie par rapport à un point ou est constitué par une grille.

5. Dispositif conforme à l'une des revendications précédentes,
**caractérisé en ce que**
l'élément de friction comporte au moins un élément annulaire ou un élément circulaire qui est de préférence situé concentriquement à l'avant ou dans l'ouverture d'aspiration.

6. Dispositif conforme à l'une des revendications précédentes,
**caractérisé en ce que**
l'élément de friction a une configuration ondulée et présente de préférence des ondulations concentriques.

7. Dispositif conforme à l'une des revendications précédentes,
**caractérisé en ce que**
l'élément de friction comporte des éléments de structure tels que par exemple des nervures, des bossages et/ou des plats, ces éléments de structure étant de préférence positionnés selon un réseau.

8. Dispositif conforme à l'une des revendications précédentes,
**caractérisé en ce que**
l'élément de friction a une surface perforée et/ou est perméable à l'air.

9. Dispositif conforme à l'une des revendications précédentes,
**caractérisé en ce que**
l'élément de friction est réalisé à partir d'au moins deux matériaux différents ayant des coefficient de friction différents et/ou des structures de surfaces différentes et/ou des dessins différents et/ou des degrés de perméabilité différents.

10. Dispositif conforme à l'une des revendications précédentes,
**caractérisé en ce qu'**
il est prévu deux éléments de friction, la position d'au moins l'un des éléments de friction étant variable le long de l'axe longitudinal du tourbillon.

11. Dispositif conforme à l'une des revendications précédentes,
**caractérisé en ce que**
l'élément annulaire et l'élément circulaire se chevauchent en direction radiale.

12. Dispositif conforme à l'une des revendications précédentes,
**caractérisé en ce que**
l'élément de friction est monté dans le boîtier au moyen d'un élément élastique.

13. Dispositif conforme à l'une des revendications précédentes,
**caractérisé en ce qu'**
il est prévu deux éléments de friction, la distance de ces deux éléments de friction l'un par rapport à l'autre et/ou par rapport au boîtier étant variable.

14. Dispositif conforme à l'une des revendications précédentes,
**caractérisé en ce que**
les premiers moyens sont réalisés sous la forme d'un premier rotor comprenant de préférence une roue de rotor et un boîtier de rotor, la roue de rotor étant mobile par rapport au boîtier de rotor dans la direction de l'axe de rotation.

15. Dispositif conforme à l'une des revendications précédentes,
**caractérisé en ce qu'**
il est prévu un régulateur pour permettre de régler les premiers moyens, de préférence pour régler, brancher, débrancher, ralentir et/ou accélérer les premiers moyens, de préférence lorsque les premiers moyens et/ou les seconds moyens sont réalisés sous la forme d'un rotor.
